# FASCICULE DE BREVET EUROPEEN

(11) **EP 1 354 487 B1**
(45) Date de publication et mention de la délivrance du brevet: **09.09.2009**
(21) Numéro de dépôt: 02712006.2
(22) Date de dépôt: 18.01.2002
(51) Int. Cl.: H04W 84/16

(54) **RESEAU LOCAL DE TELECOMMUNICATION PRIVE**
LOKALES NETZ FÜR PRIVATE TELEKOMMUNIKATION
PRIVATE TELECOMMUNICATION LOCAL NETWORK

(30) Priorité: 23.01.2001 FR 0100870
(43) Date de publication de la demande: 22.10.2003
(73) Titulaire: Inventel Systèmes, 75005 Paris (FR)
(72) Inventeur: DEGUET, Bruno, F-77870 Vulaines Sur Seine (FR); DEVIGE, Fabrice, F-92170 Vanves (FR); THEPAUT, Frédéric, F-75012 Paris (FR)
(74) Mandataire: Kohrs, Martin
(86) Numéro de dépôt international: PCT/FR2002/000208
(87) Numéro de publication internationale: WO 2002/060201

(56) Documents cités:
- EP-A- 0 895 433
- WO-A-01/49050
- WO-A-97/10684
- WO-A-98/45383
- DE-A- 19 602 449
- DUMMANN U: "DER WEG ZUM SCHNURLOSEN BUERO" NACHRICHTEN ELEKTRONIK UND TELEMATIK, VERLAG DR. HUETHIG. HEIDELBERG, DE, vol. 50, no. 3, 1 mars 1996 (1996-03-01), pages 46-47, XP000583455 ISSN: 0177-5499
- "RADIO EQUIPMENT AND SYSTEMS (RES);DIGITAL EUROPEAN CORDLESS TELECOMMUNICATIONS (DECT) COMMON INTERFACE PART 5: NETWORK LAYER" EUROPEAN TELECOMMUNICATION STANDARD, XX, XX, 1 octobre 1992 (1992-10-01), pages 27-36,41-43,47,54,60,75-78,118,-174-177,23 9, XP002069831

## Description

La présente invention est relative aux réseaux locaux de télécommunication privés. WO 97/10684 divulgue un exemple d'un tel réseau.

Plus particulièrement, l'invention concerne un réseau local de télécommunication privé comportant :
- une base centrale reliée à un réseau de télécommunication public, ladite base centrale comportant une unité centrale électronique dotée d'au moins une mémoire,
- au moins un premier périphérique adapté pour communiquer sans fil (par voie radio ou par transmission d'autres ondes) avec la base centrale, selon un protocole de communication bidirectionnel numérique, ledit premier périphérique comportant une unité centrale électronique dotée d'au moins une mémoire, ledit premier périphérique comportant en outre au moins une interface d'entrée adaptée pour recevoir des informations (il peut s'agir du clavier d'un combiné téléphonique, du microphone, ou bien d'une interface connectée directement à un dispositif électronique tel que détecteur d'alarme, capteur de mesure, etc.) et au moins une interface de sortie adaptée pour communiquer des informations à l'utilisateur.

La présente invention a notamment pour but de permettre aux utilisateurs d'un tel système de télécommunication de recevoir et d'envoyer des messages sous forme numérique, au moins entre eux et le cas échéant avec l'extérieur par le biais du réseau de télécommunication public.

A cet effet, selon l'invention, un système de télécommunication du genre en question est caractérisé en ce que la base centrale a en mémoire au moins une boîte aux lettres adaptée pour mémoriser au moins des messages alphanumériques, la base centrale étant adaptée pour envoyer audit premier périphérique et recevoir dudit premier périphérique lesdits messages alphanumériques, par ledit protocole de communication, et en ce que ledit premier périphérique est adapté pour communiquer à l'utilisateur les messages contenus dans ladite boîte aux lettres par ladite interface de sortie.

Ces dispositions permettent de minimiser les stockages de données mémorisées notamment lorsque le réseau local de communication privé comporte plusieurs périphériques avec éventuellement plusieurs boîtes aux lettres personnelles ou de groupe, puisque les messages ne sont alors stockés qu'une seule fois dans la base centrale tout en étant accessibles depuis n'importe quel périphérique. On peut donc minimiser ainsi les tailles de mémoire des périphériques.

Dans des modes de réalisation préférés de l'invention, on peut éventuellement avoir recours en outre à l'une et/ou à l'autre des dispositions suivante :
- la base centrale est adaptée pour reconnaître et mémoriser dans ladite boîte aux lettres des messages alphanumériques reçus du réseau de télécommunication public ;
- la base centrale est adaptée pour recevoir, au début d'un appel entrant provenant du réseau de télécommunication public, un champ de données d'identification permettant normalement d'identifier un appelant, ladite base centrale étant adaptée pour détecter, dans ledit champ de données d'identification, un code indiquant que les données transmises dans ledit appel entrant contiennent un message alphanumérique, et pour mémoriser alors ce message alphanumérique dans la boîte aux lettres ;
- la base centrale est adaptée pour ne pas déclencher de sonnerie lors de la réception d'un appel entrant contenant un message alphanumérique ;
- l'unité centrale de la base centrale est adaptée pour moduler et démoduler, avec les mêmes composants, des signaux analogiques du réseau de télécommunication public représentatifs d'un son et des signaux analogiques du réseau de télécommunication public représentatifs d'un message alphanumérique ;
- le premier périphérique est adapté pour permettre à l'utilisateur de créer des messages alphanumériques et de les envoyer vers la base centrale pour être mémorisés dans ladite boîte aux lettres ;
- l'interface de sortie du premier périphérique est un écran ;
- le réseau local de communication privé comporte en outre au moins un deuxième périphérique adapté pour communiquer sans fil avec la base centrale, selon ledit protocole de communication bidirectionnel, ledit deuxième périphérique comportant une unité centrale électronique dotée d'une mémoire, le deuxième périphérique comportant en outre au moins une interface d'entrée adaptée pour recevoir des informations, le premier périphérique étant adapté pour envoyer à la base centrale des messages fonction d'au moins certaines des informations reçues par l'interface d'entrée dudit deuxième périphérique, ces messages étant destinés à être mémorisés dans ladite boîte aux lettres ;
- l'interface d'entrée du deuxième périphérique est reliée à au moins un capteur ;
- le deuxième périphérique comporte en outre une interface de sortie et est adapté pour permettre à l'utilisateur d'accéder à la boîte aux lettres et de se faire communiquer les messages contenus dans ladite boîte aux lettres par ladite interface de sortie ;
- la boîte aux lettres est une boîte aux lettres personnelle et la base centrale est adaptée pour signaler aux premier et deuxième périphériques l'existence de messages non lus dans la boîte aux lettres lorsqu'une communication est établie entre ladite base centrale et l'un desdits premier et deuxième périphériques : on permet ainsi à l'utilisateur de la boîte aux lettres d'être informé de l'arrivée d'un nouveau message à partir de n'importe quel périphérique du réseau local, puis d'accéder à ce message à partir du même périphérique ;
- la boîte aux lettres est une boîte aux lettres de groupe recevant des messages de groupe destinés à tous les utilisateurs du réseau local de télécommunication privé, ladite base centrale étant adaptée pour transmettre à chacun des premier et deuxième périphériques tout message de groupe contenu dans la boîte aux lettres de groupe ;
- la boîte aux lettres est une boîte aux lettres personnelle, la base centrale ayant en mémoire un code d'accès propre à ladite boîte aux lettres et ne permettant l'accès à ladite boîte aux lettres que si l'utilisateur lui communique ledit code d'accès ;
- la boîte aux lettres est une boîte aux lettres personnelle, la base centrale ayant en mémoire un code d'accès propre à ladite boîte aux lettres, et ladite base centrale étant adaptée pour permettre un accès libre à ladite boîte aux lettres à partir du premier périphérique et ne permettant l'accès à ladite boîte aux lettres à partir du deuxième périphérique que si l'utilisateur dudit deuxième périphérique lui communique ledit code d'accès,
- ledit protocole de communication bidirectionnel est le protocole "DECT", prévoyant d'échanger des données entre la base centrale et au moins ledit premier périphérique sous forme de trames successives comprenant chacune un premier champ de données destiné à transporter des données relatives au fonctionnement du réseau local de télécommunication privé et un deuxième champ de données plus long destiné à transporter au moins des signaux numériques représentatifs de la voix humaine, les messages alphanumériques provenant de la boîte aux lettres et envoyés à ladite boîte aux lettres et échangés entre la base centrale et ledit premier périphérique étant acheminés dans ledit deuxième champ.

D'autres caractéristiques et avantages de l'invention apparaîtront au cours de la description suivante d'une de ses formes de réalisation, donnée à titre d'exemple non limitatif, en regard des dessins joints.

Sur les dessins :
la figure 1 est un schéma bloc d'un réseau local de télécommunication selon une première forme de réalisation de l'invention,
- la figure 2 est un schéma illustrant la transmission des données entre la base centrale et les périphériques du réseau local de la figure 1,
- et la figure 3 est un schéma bloc d'un réseau local de télécommunication selon une deuxième forme de réalisation de l'invention.

Sur les différentes figures, les mêmes références désignent des éléments identiques ou similaires.

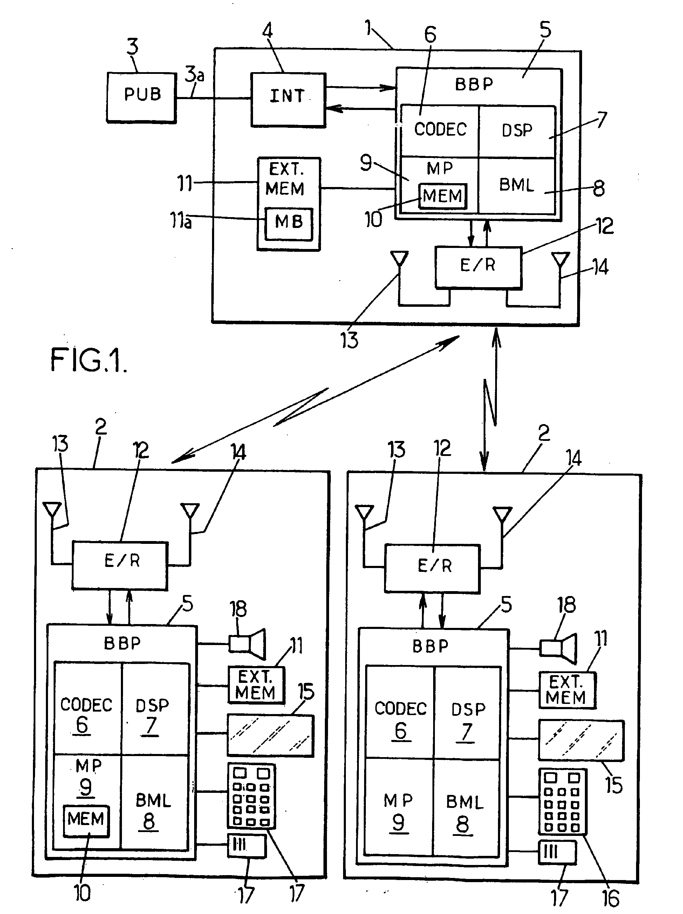

Comme représenté sur la figure 1, l'invention concerne un réseau local de télécommunication privé fonctionnant sous un protocole de télécommunications bidirectionnel numérique, de préférence le protocole "DECT" ou éventuellement "BLUETOOTH".

Ce réseau local de télécommunications comporte une base centrale 1, généralement fixe, et un ou plusieurs périphériques 2 généralement mobiles et constitués par exemple par des combinés téléphoniques portatifs sans fil.

La base centrale 1 est reliée au réseau téléphonique public 3, généralement par l'intermédiaire d'une liaison filaire 3a constituant un raccordement privé audit réseau téléphonique public. Ce raccordement 3a est relié à un circuit d'interface 4 (INT) qui communique de façon bidirectionnelle avec une unité centrale 5 (BBP) ou processeur en bande de base ("BASE BAND PROCESSOR").

L'unité centrale 5 comporte elle-même généralement plusieurs modules, notamment :
- un module 6 (CODEC) adapté pour moduler et démoduler les signaux analogiques du réseau public 3,
- un processeur (DSP) 7 adapté pour effectuer différents traitements des signaux sonores,
- un circuit logique rapide 8 (BML) ("BURST MODE LOGIC"),
- un microprocesseur 9 (MP) comprenant de préférence une mémoire interne 10 (MEM) telle qu'une mémoire vive ou autre.

De plus, l'unité centrale 5 est généralement reliée également :
- à une mémoire externe 11 (EXT MEM) telle qu'une mémoire EEPROM (contenant par exemple des données relatives aux utilisateurs du réseau local de communication à la configuration de ce réseau, ainsi que des boîtes aux lettres virtuelles décrites ci-après),
- ainsi qu'à un circuit radio 12 d'émission et de réception (E/R) lui-même relié à deux antennes d'émission/réception 13, 14.

Par ailleurs, chaque périphérique 2, qui communique avec la base centrale 1 par voie radio (ou le cas échéant par toute autre transmission d'ondes), comporte également une unité centrale 5 identique ou similaire à l'unité centrale de la base centrale 1, un circuit radio 12 et des antennes 13, 14 (ou de préférence une seule antenne 13) identiques ou similaires à ceux de la base centrale 1, et le cas échéant une mémoire externe 11 similaire à celle de la base centrale 1 mais généralement de capacité inférieure.

De plus, l'unité centrale 5 de chaque périphérique 5 est reliée à une interface de sortie telle qu'un écran 15 et à une interface d'entrée telle qu'un clavier 16, de même qu'à un microphone 17 (pouvant le cas échéant servir d'interface d'entrée pour entrer le contenu de messages alphanumériques, par reconnaissance vocale) et à un haut-parleur 18.

Les périphériques 2 peuvent bien entendu servir classiquement à établir une communication vocale, soit entre eux, soit avec l'extérieur par l'intermédiaire du réseau de télécommunications public 3, mais ils peuvent également être utilisés pour envoyer ou consulter des messages alphanumériques ou autres (images, messages vocaux, etc.).

A cet effet, la base centrale 1 a en mémoire (par exemple dans la mémoire 10 et/ou dans la mémoire 11) une ou plusieurs boîtes aux lettres virtuelles représentées chacune par un espace mémoire 11a (MB) de la base centrale 1 et généralement identifiées chacune par un code d'identification (cette disposition est toutefois facultative au cas où la base 1 comporte une seule boîte aux lettres), ladite base centrale est adaptée pour mémoriser dans cette boîte aux lettres des messages alphanumériques qu'elle reçoit accompagnés dudit code d'identification de la boîte aux lettres à partir des périphériques 2 et/ou du réseau de télécommunications public 3.

Lorsque les messages en question sont reçus du réseau de communication public 3, ceux-ci sont reconnus par l'unité centrale 5 au moyen d'un code reçu de préférence au début de l'appel entrant qui transmet le message, avantageusement dans un champ de données d'identification permettant normalement d'identifier un appelant. Le message alphanumérique ainsi reçu est alors mémorisé dans la boîte aux lettres dont le code d'identification est contenu dans ledit message (ou dans la boîte aux lettres unique s'il n'y en a qu'une, auquel cas ledit code d'identification n'est pas obligatoire).

Avantageusement, la base centrale est adaptée pour ne pas déclencher de sonnerie lors de la réception d'un appel entrant contenant un message alphanumérique.

On notera que l'unité centrale 5 de la base centrale module et démodule, avec les mêmes composants, des signaux analogiques du réseau de télécommunication public représentatifs d'un son et des signaux analogiques du réseau de télécommunication public représentatifs d'un message alphanumérique, de sorte que les fonctionnalités de messagerie selon l'invention n'impliquent pas de composant supplémentaire par rapport à une base centrale DECT classique.

Par ailleurs, les messages alphanumériques que la base centrale 1 reçoit des périphériques 2 sont entrés dans lesdits périphériques par les utilisateurs, notamment au moyen du clavier 16.

Par exemple, chaque utilisateur peut accéder à un module logiciel d'envoi de messages alphanumériques, en sélectionnant et en validant au moyen du clavier 16, un élément d'un menu affiché par l'écran 15.

Une fois dans ce module logiciel, l'utilisateur peut entrer dans le périphérique 2, au moyen du clavier 16, le code d'identification de la boîte aux lettres correspondant à la personne à qui il souhaite envoyer un message (si nécessaire), puis il entre ledit message également au moyen du clavier 16. Ce code d'identification peut être une adresse de boîte aux lettres interne à la base 1, ou encore une adresse de boîte aux lettres externe, accessible par le réseau public 3.

On notera que les périphériques 2 pourront avantageusement être dotés de logiciels d'aide à la saisie, permettant par exemple une saisie prédictive en proposant des mots probables que l'utilisateur n'a qu'à valider, dès que l'utilisateur a entré les premières lettres de chaque mot.

Après validation de ce message, toujours au moyen du clavier 16, le périphérique 2 envoie le message alphanumérique par radio à la base centrale 1.

Cette transmission d'informations se fait conformément au protocole de communication bidirectionnel utilisé, par exemple le protocole "DECT".

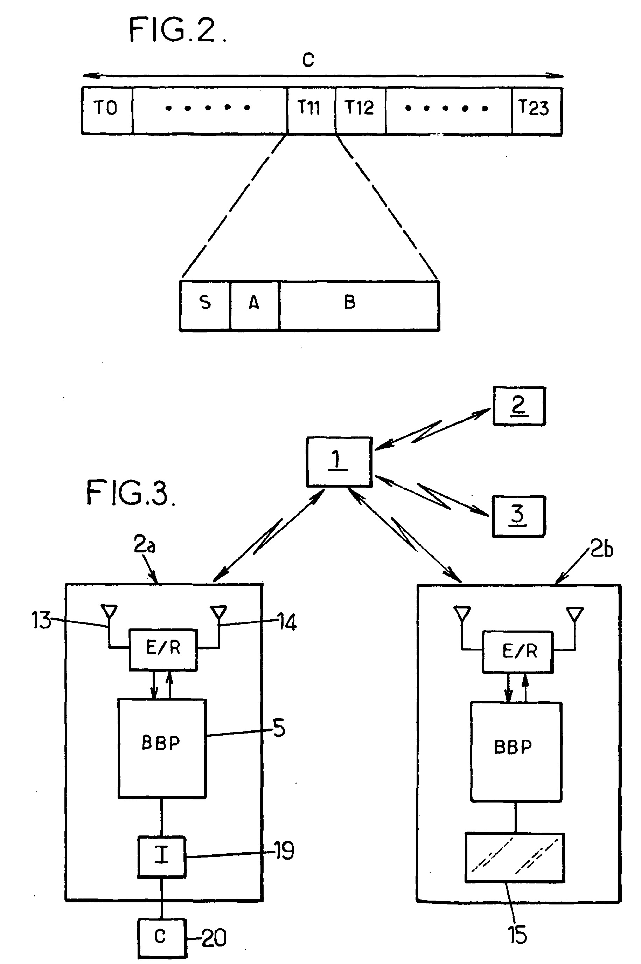

Comme représenté sur la figure 2, ce protocole est de type "TDMA" et prévoit une transmission de données selon un cycle répétitif C long par exemple de 10 ms, comprenant douze trames de données T0-T11 pour la communication de la base centrale 1 vers les périphériques 2 et douze trames de données T12-T23 pour la communication des périphériques 2 vers la base centrale 1.

A l'intérieur de chaque trame de données, les données commencent par un bloc S de synchronisation de 32 bits, suivi par un bloc A de 64 bits (dont 48 bits utiles et 16 bits de code de détection d'erreurs de type CRC) permettant de transmettre des données relatives au fonctionnement du réseau local DECT, puis un bloc de données B de 324 bis, dont 320 bits utiles, destinés couramment à transporter des données numériques représentatives de la voix humaine.

Pour accélérer la transmission des messages alphanumériques entre les périphériques 2 et la base centrale 1 (dans les deux sens), lesdits messages alphanumériques sont transportés dans les blocs de données B.

Pour que ces messages alphanumériques soient clairement identifiés par l'unité centrale 5 de la base centrale, ces messages comportent de préférence le code d'identification de la boîte aux lettres à laquelle ils sont destinés : ainsi, l'unité centrale 5 de la base centrale identifie les messages alphanumériques reçus et les mémorise dans la boîte aux lettres correspondante, ou déclenche un appel par le réseau 3, pour transmettre le message à l'extérieur.

Dès lors que la base centrale 1 a en mémoire un ou plusieurs messages reçus et destinés à l'une des boîtes aux lettres internes au réseau local de communication, le traitement de ces messages diffère selon qu'il s'agit de messages individuels, stockés dans des boîtes aux lettres propres chacune à un utilisateur, ou de messages de groupes stockés dans une boîte aux lettres particulière dite boîte aux lettres de groupe.

S'il s'agit de messages individuels stockés dans des boîtes aux lettres individuelles, la base centrale 1 notifie à chaque périphérique 2 l'existence d'un message non lu destiné à un utilisateur particulier.

S'il se trouve qu'un utilisateur ultérieur du périphérique 2 est la personne destinataire du message, cet utilisateur peut accéder aux messages en commandant par son clavier 16 la transmission de ce message vers le périphérique 2 qu'il est en train d'utiliser. De préférence, cette transmission du message vers le périphérique 2 est subordonnée à l'entrée d'un code d'accès sur le clavier 16, code d'accès qui est ensuite transmis par le périphérique 2 à la base centrale 1 de façon qu'elle vérifie la conformité de ce code d'accès avec un code d'accès précédemment mémorisé par ladite base centrale 1 et propre à la boîte aux lettres où est stocké le message non lu.

Eventuellement, il peut être possible de définir un périphérique 2 privilégié pour chaque boîte aux lettres, en donnant la possibilité d'accéder directement à la boîte aux lettres correspondante sans avoir à entrer de code d'accès.

Une fois que le message en question a été lu, la base centrale 1 détruit ou archive le message alphanumérique en question en le marquant comme lu, et ne notifie donc plus l'existence de ce message aux périphériques 2.

Les messages de groupe en question peuvent être soit des messages alphanumériques ou autres, lisibles par chaque utilisateur à partir des périphériques 2, à la demande, soit être des messages contenant des informations destinées à être affichées systématiquement en permanence à l'écran 15 de chaque périphérique 2 (par exemple, la température extérieure, ou autre).

De tels messages de groupe peuvent permettre notamment à plusieurs utilisateurs de participer en commun à un même jeu électronique donnant lieu à des affichages "simultanés" sur les écrans 15 des différents périphériques 2, en fonction par exemple de commandes ou de données entrées par les différents participants au jeu sur les claviers 16 de leurs périphériques 2 respectifs.

En revanche, lorsqu'il s'agit d'un message de groupe contenant par exemple des informations générales (météorologie, cours de la bourse, résultats sportifs, etc.), la base centrale 1 peut transférer systématiquement le message de groupe une seule fois à chaque périphérique 2 lors de la mise en marche de ce périphérique.

Comme représenté sur la figure 3, il est possible de mettre à profit les fonctionnalités d'envoi de messages alphanumériques pour transmettre vers la base centrale 1 des données provenant d'un capteur 20 (C) ou autre appareil électronique relié par une interface 19 (I) à l'unité centrale 5 d'un périphérique 2a simplifié, qui pourrait éventuellement ne comporter ni clavier, ni écran, ni microphone, ni haut-parleur.

On peut ainsi transmettre vers la base centrale 1 par exemple des informations météorologiques, choisies notamment parmi la pression ambiante, la température ambiante intérieure/extérieure, le taux d'hydrométrie ambiant, etc.

Ces données peuvent être soit stockées dans la base centrale 1 et communiquées aux utilisateurs des périphériques 2 à leur demande ou cycliquement, soit retransmises vers un autre périphérique 2b comportant uniquement une unité centrale 5, un circuit radio 12, des antennes 13, 14 et un écran 15 pour afficher les données météorologiques reçues à partir du ou des périphériques 2a.

## Revendications

1. Réseau local de télécommunication privé comportant :
- une base centrale (1) reliée à un réseau de télécommunication public, ladite base centrale comportant une unité centrale électronique (5) dotée d'au moins une mémoire (10, 11),
- au moins un premier périphérique (2) adapté pour communiquer sans fil avec la base centrale (1), selon un protocole de communication bidirectionnel numérique, ledit premier périphérique comportant une unité centrale électronique (5) dotée d'au moins une mémoire (10, 11), ledit premier périphérique comportant en outre au moins une interface d'entrée (16) adaptée pour recevoir des informations et au moins une interface de sortie (15) adaptée pour communiquer des informations à l'utilisateur **caractérisé en ce que** la base centrale (1) a en mémoire au moins une boîte aux lettres adaptée pour mémoriser au moins des messages alphanumériques, la base centrale étant adaptée pour envoyer audit premier périphérique (2) et recevoir dudit premier périphérique lesdits messages alphanumériques, par ledit protocole de communication,
et **en ce que** ledit premier périphérique (2) est adapté pour communiquer à l'utilisateur les messages contenus dans ladite boîte aux lettres par ladite interface de sortie (15).

2. Réseau local de communication selon la revendication 1, dans lequel la base centrale (1) est adaptée pour reconnaître et mémoriser dans ladite boîte aux lettres des messages alphanumériques reçus du réseau de télécommunication public (3).

3. Réseau local de communication selon la revendication 2, dans lequel la base centrale (1) est adaptée pour recevoir, au début d'un appel entrant provenant du réseau de télécommunication public, un champ de données d'identification permettant normalement d'identifier un appelant, ladite base centrale étant adaptée pour détecter, dans ledit champ de données d'identification, un code indiquant que les données transmises dans ledit appel entrant contiennent un message alphanumérique, et pour mémoriser alors ce message alphanumérique dans la boîte aux lettres.

4. Réseau local de communication selon la revendication 2 ou la revendication 3, dans lequel la base centrale (1) est adaptée pour ne pas déclencher de sonnerie lors de la réception d'un appel entrant contenant un message alphanumérique.

5. Réseau local de communication selon l'une quelconque des revendications 2 à 4, dans lequel l'unité centrale (5) de la base centrale (1) est adaptée pour moduler et démoduler, avec les mêmes composants, des signaux analogiques du réseau de télécommunication public (3) représentatifs d'un son et des signaux analogiques du réseau de télécommunication public représentatifs d'un message alphanumérique.

6. Réseau local de communication selon l'une quelconque des revendications précédentes, dans lequel le premier périphérique est adapté pour permettre à l'utilisateur de créer des messages alphanumériques et de les envoyer vers la base centrale pour être mémorisés dans ladite boîte aux lettres.

7. Réseau local de communication selon l'une quelconque des revendications précédentes, dans lequel l'interface de sortie du premier périphérique (2) est un écran (15).

8. Réseau local de communication selon l'une quelconque des revendications précédentes, dans lequel le réseau local de communication privé comporte en outre au moins un deuxième périphérique (2, 2a) adapté pour communiquer sans fil avec la base centrale (1), selon ledit protocole de communication bidirectionnel, ledit deuxième périphérique comportant une unité centrale électronique (5) dotée d'une mémoire (10, 11), le deuxième périphérique comportant en outre au moins une interface d'entrée (16, 19) adaptée pour recevoir des informations, le premier périphérique étant adapté pour envoyer à la base centrale des messages fonction d'au moins certaines des informations reçues par l'interface d'entrée (16, 19) dudit deuxième périphérique, ces messages étant destinés à être mémorisés dans ladite boîte aux lettres.

9. Réseau local de communication selon la revendication 8, dans lequel l'interface d'entrée (19) du deuxième périphérique (2a) est reliée à au moins un capteur (20).

10. Réseau local de communication selon la revendication 8, dans lequel le deuxième périphérique (2) comporte en outre une interface de sortie (15) et est adapté pour permettre à l'utilisateur d'accéder à la boîte aux lettres et de se faire communiquer les messages contenus dans ladite boîte aux lettres par ladite interface de sortie.

11. Réseau local de communication selon la revendication 10, dans lequel la boîte aux lettres est une boîte aux lettres personnelle et la base centrale (1) est adaptée pour signaler aux premier et deuxième périphériques (2) l'existence de messages non lus dans la boîte aux lettres.

12. Réseau local de communication selon la revendication 10, dans lequel la boîte aux lettres est une boîte aux lettres de groupe recevant des messages de groupe destinés à tous les utilisateurs du réseau local de télécommunication privé, ladite base centrale étant adaptée pour transmettre à chacun des premier et deuxième périphériques (2) tout message de groupe contenu dans la boîte aux lettres de groupe.

13. Réseau local de communication selon l'une quelconque des revendications 1 à 11, dans lequel la boîte aux lettres est une boîte aux lettres personnelle, la base centrale (1) ayant en mémoire un code d'accès propre à ladite boîte aux lettres et ne permettant l'accès à ladite boîte aux lettres que si l'utilisateur lui communique ledit code d'accès.

14. Réseau local de communication selon l'une quelconque des revendications 1 à 11, dans lequel la boîte aux lettres est une boîte aux lettres personnelle, la base centrale (1) ayant en mémoire un code d'accès propre à ladite boîte aux lettres, et ladite base centrale (1) étant adaptée pour permettre un accès libre à ladite boîte aux lettres à partir du premier périphérique (2) et ne permettant l'accès à ladite boîte aux lettres à partir du deuxième périphérique (2) que si l'utilisateur dudit deuxième périphérique lui communique ledit code d'accès.

15. Réseau local de communication selon l'une quelconque des revendications précédentes, dans lequel ledit protocole de communication bidirectionnel est le protocole DECT, prévoyant d'échanger des données entre la base centrale et au moins ledit premier périphérique sous forme de trames successives comprenant chacune un premier champ de données destiné à transporter des données relatives au fonctionnement du réseau local de télécommunication privé et un deuxième champ de données plus long destiné à transporter au moins des signaux numériques représentatifs de la voix humaine, les messages alphanumériques provenant de la boîte aux lettres et envoyés à ladite boîte aux lettres et échangés entre la base centrale et ledit premier périphérique étant acheminés dans ledit deuxième champ.

## Claims

1. Local private telecommunications network comprising:
- a central base (1) connected to a public telecommunications network, said central base comprising a central processor unit (5) equipped with at least a memory (10, 11)
- at least a first peripheral device (2) adapted for wireless communication with the central base (1), according to a digital bidirectional communication protocol, said first peripheral device comprising a central processor unit (5) equipped with at least a memory (10, 11), said first peripheral device also comprising at least one input interface (16) adapted to receive information and at least an output interface (15) adapted to communicate information to the user, **characterized in that** the central base (1) has in memory at least one mailbox adapted to memorize at least alphanumeric messages, the central base being adapted to send to said first peripheral device (2) and receive from said first peripheral device said alphanumeric messages, by said communication protocol, and **in that** said first peripheral device (2) is adapted to communicate to the user the messages contained in said mailbox via said output interface (15).

2. Local communications network according to claim 1, in which the central base (1) is adapted to recognize and memorize in said mailbox alphanumeric messages received from the public telecommunications network (3).

3. Local communications network according to claim 2, in which the central base (1) is adapted to receive, at the start of an incoming call from the public telecommunications network, a field of identification data enabling normally to identify a caller, said central base being adapted to detect, in said field of identification data, a code indicating that the data transmitted in said incoming call contains an alphanumeric message, and to then memorize this alphanumeric message in the mailbox.

4. Local communications network according to claim 2 or claim 3, in which the central base (1) is adapted to not trigger a ring-tone during reception of an incoming call containing an alphanumeric message.

5. Local communications network according to any one of claims 2 to 4, in which the central processing unit (5) of the central base (1) is adapted to modulate and demodulate, with the same components, analogical signals from the public telecommunications network (3) representative of a sound and analogical signals from the public telecommunications network representative of an alphanumeric message.

6. Local communications network according to any one of the preceding claims, in which the first peripheral device is adapted to enable the user to create alphanumeric messages and to send them to the central base to be memorized in said mailbox.

7. Local communications network according to any one of the preceding claims, in which the output interface of the first peripheral device (2) is a screen (15).

8. Local communications network according to any one of the preceding claims, in which the private local communications network also comprises at least a second peripheral device (2, 2a) adapted for wireless communication with the central base (1), according to said bidirectional communication protocol, said second peripheral device comprising an electronic central processing unit equipped with a memory (10, 11), the second peripheral device also comprising at least one input interface (16, 19) adapted to receive information, the first peripheral device being adapted to send to the central base messages according to at least some information received by the input interface (16, 19) from said second peripheral device, these messages being intended to be memorized in said mailbox.

9. Local communications network according to claim 8, in which the input interface (19) of the second peripheral device (2a) is connected to at least one sensor (20).

10. Local communications network according to claim 8, in which the second peripheral device (2) also comprises an output interface (15) and is adapted to enable the user to access the mailbox and communicate the messages contained in said mailbox via said output interface.

11. Local communications network according to claim 10, in which the mailbox is a personal mailbox and the central base (1) is adapted to signal to the first and second peripheral devices (2) the existence of unread messages in the mailbox.

12. Local communications network according to claim 10, in which the mailbox is a group mailbox receiving group messages intended for all the users of the local private telecommunications network, said central base being adapted to transmit to each of the first and second peripheral devices (2) any group message contained in the group mailbox.

13. Local communications network according to any one of claims 1 to 11, in which the mailbox is a personal mailbox, the central base (1) having in its memory an access code specific to said mailbox and only enabling access to said mailbox if the user communicates said access code.

14. Local communications network according to any one of claims 1 to 11, in which the mailbox is a personal mailbox, the central base (1) having in its memory an access code specific to said mailbox, and said central base (1) being adapted to enable free access to said mailbox from the first peripheral device (2) and only enabling access to said mailbox from the second peripheral device (2) if the user of said second peripheral device communicates said access code to it.

15. Local communications network according to any one of the preceding claims, in which said bidirectional communications protocol is the DECT protocol, providing for the exchange of data between the central base and at least said first peripheral device in the form of successive frames each comprising a first data field intended for the transport of data relating to the operation of the local private telecommunications network and a second longer data field intended for the transport of at least digital signals representative of the human voice, the alphanumeric messages from the mailbox and sent to said mailbox and exchanged between the central base and said first peripheral device being routed in said second field.

## Patentansprüche

1. Lokales privates Telekommunikationsnetzwerk mit
- einer mit einem öffentlichen Telekommunikationsnetzwerk verbundenen zentralen Basisstation (1), wobei die zentrale Basisstation eine mit mindestens einem Speicher (10, 11) ausgestattete elektronische Zentraleinheit (5) aufweist,
- mindestens einer ersten Peripherieeinheit (2), die geeignet ist, um gemäß einem digitalen bidirektionalen Kommunikationsprotokoll mit der zentralen Basisstation (1) drahtlos zu kommunizieren, wobei die erste Peripherieeinheit eine mit mindestens einem Speicher (10, 11) ausgestattete elektronische Zentraleinheit (5) aufweist, wobei die erste Peripherieeinheit ferner mindestens eine Eingangsschnittstelle (16) aufweist, die geeignet ist, um Informationen zu empfangen, und mindestens eine Ausgangsschnittstelle (15), die geeignet ist, um dem Benutzer Informationen zu übermitteln, **dadurch gekennzeichnet, dass** in der zentralen Basisstation (1) mindestens eine Mailbox gespeichert ist, die geeignet ist, um mindestens alphanumerische Nachrichten zu speichern, wobei die zentrale Basisstation geeignet ist, um die alphanumerischen Nachrichten über das Kommunikationsprotokoll an die erste Peripherieeinheit (2) zu senden und von der ersten Peripherieeinheit zu empfangen, und dass die erste Peripherieeinheit (2) geeignet ist, um dem Benutzer über die Ausgangsschnittstelle (15) die in der Mailbox enthaltenen Nachrichten zu übermitteln.

2. Lokales Kommunikationsnetzwerk nach Anspruch 1, bei dem die zentrale Basisstation (1) geeignet ist, um in der Mailbox alphanumerische Nachrichten, die aus dem öffentlichen Telekommunikationsnetzwerk (3) empfangen werden, zu erkennen und zu speichern.

3. Lokales Kommunikationsnetzwerk nach Anspruch 2, bei dem die zentrale Basisstation (1) geeignet ist, um zu Beginn eines eingehenden Rufs aus dem öffentlichen Telekommunikationsnetzwerk ein Feld mit Identifizierungsdaten zu empfangen, mit denen ein Anrufender normalerweise identifiziert werden kann, wobei die zentrale Basisstation geeignet ist, um in dem Identifizierungsdatenfeld einen Code zu erfassen, der angibt, dass die mit dem eingehenden Ruf übertragenen Daten eine alphanumerische Nachricht enthalten, und um diese alphanumerische Nachricht anschließend in der Mailbox zu speichern.

4. Lokales Kommunikationsnetzwerk nach Anspruch 2 oder nach Anspruch 3, bei dem die zentrale Basisstation (1) geeignet ist, um bei dem Empfang eines eingehenden, eine alphanumerische Nachricht enthaltenden Rufs ein Klingeln nicht auszulösen.

5. Lokales Kommunikationsnetzwerk nach einem der Ansprüche 2 bis 4, bei dem die Zentraleinheit (5) der zentralen Basisstation (1) geeignet ist, um mit denselben Komponenten analoge Signale des öffentlichen Telekommunikationsnetzwerks (3), welche für einen Ton repräsentativ sind, und analoge Signale des öffentlichen Telekommunikationsnetzwerks (3), welche für eine alphanumerische Nachricht repräsentativ sind, zu modulieren und zu demodulieren.

6. Lokales Kommunikationsnetzwerk nach einem der vorhergehenden Ansprüche, bei dem die erste Peripherieeinheit geeignet ist, um es dem Benutzer zu ermöglichen, alphanumerische Nachrichten zu erzeugen und sie an die zentrale Basisstation zu senden, damit sie in der Mailbox gespeichert werden.

7. Lokales Kommunikationsnetzwerk nach einem der vorhergehenden Ansprüche, bei dem die Ausgangsschnittstelle der ersten Peripherieeinheit (2) ein Bildschirm ist.

8. Lokales Kommunikationsnetzwerk nach einem der vorhergehenden Ansprüche, bei dem das lokale private Kommunikationsnetzwerk ferner mindestens eine zweite Peripherieeinheit (2, 2a) aufweist, die geeignet ist, um gemäß dem bidirektionalen Kommunikationsprotokoll mit der zentralen Basisstation (1) drahtlos zu kommunizieren, wobei die zweite Peripherieeinheit eine mit einem Speicher (10, 11) ausgestatteten elektronische Zentraleinheit (5) aufweist, wobei die zweite Peripherieeinheit ferner mindestens eine Eingangsschnittstelle (16, 19) aufweist, die geeignet ist, um Informationen zu empfangen, wobei die erste Peripherieeinheit geeignet ist, um an die zentrale Basisstation Nachrichten zu senden, die mindestens von bestimmten der von der Eingangsschnittstelle (16, 19) der zweiten Peripherieeinheit empfangenen Informationen abhängig sind, wobei diese Nachrichten dazu bestimmt sind, in der Mailbox gespeichert zu senden.

9. Lokales Kommunikationsnetzwerk nach Anspruch 8, bei dem die Eingangsschnittstelle (19) der zweiten Peripherieeinheit (2a) mit mindestens einem Sensor (20) verbunden ist.

10. Lokales Kommunikationsnetzwerk nach Anspruch 8, bei dem die zweite Peripherieeinheit (2) ferner eine Ausgangsschnittstelle (15) aufweist und geeignet ist, um dem Benutzer den Zugang zu der Mailbox zu ermöglichen und es ihm zu ermöglichen, sich über die Ausgangsschnittstelle die in der Mailbox enthaltenen Nachrichten übermitteln zu lassen.

11. Lokales Kommunikationsnetzwerk nach Anspruch 10, bei dem die Mailbox eine persönliche Mailbox ist und die zentrale Basisstation (1) geeignet ist, um der ersten und der zweiten Peripherieeinheit (2) das Vorhandensein von nicht gelesenen Nachrichten in der Mailbox zu signalisieren.

12. Lokales Kommunikationsnetzwerk nach Anspruch 10, bei dem die Mailbox eine Gruppenmailbox ist, die Gruppennachrichten, die für alle Benutzer des lokalen privaten Telekommunikationsnetzwerks bestimmt sind, empfängt, wobei die zentrale Basisstation geeignet ist, um an jede von den ersten und zweiten Peripherieeinheiten (2) jede in der Gruppenmailbox enthaltene Gruppennachricht zu übertragen.

13. Lokales Kommunikationsnetzwerk nach einem der Ansprüche 1 bis 11, bei dem die Mailbox eine persönliche Mailbox ist, wobei in der zentralen Basisstation (1) ein der Mailbox eigener Zugangscode gespeichert ist und die zentrale Basisstation den Zugang zu der Mailbox nur freigibt, wenn der Benutzer ihr den Zugangscode mitteilt.

14. Lokales Kommunikationsnetzwerk nach einem der Ansprüche 1 bis 11, bei dem die Mailbox eine persönliche Mailbox ist, wobei in der zentralen Basisstation (1) ein der Mailbox eigener Zugangscode gespeichert ist, und wobei die zentrale Basisstation (1) geeignet ist, um von der ersten Peripherieeinheit (2) aus einen freien Zugang zu der Mailbox zu ermöglichen, und den Zugang zu der Mailbox von der zweiten Peripherieeinheit (2) aus nur ermöglicht, wenn der Benutzer der zweiten Peripherieeinheit ihr den Zugangscode mitteilt.

15. Lokales Kommunikationsnetzwerk nach einem der vorhergehenden Ansprüche, bei dem das bidirektionale Kommunikationsprotokoll das DECT- Protokoll ist, das den Austausch von Daten zwischen der zentralen Basisstation und mindestens der ersten Peripherieeinheit in Form von aufeinanderfolgenden Rahmen mit jeweils einem ersten Datenfeld für die Übertragung der Daten über den Betrieb des lokalen privaten Telekommunikationsnetzwerks und einem zweiten, längeren Datenfeld für die Übertragung mindestens der digitalen, für die menschliche Stimme repräsentativen Signale vorsieht, wobei die aus der Mailbox stammenden und zwischen der zentralen Basisstation und der ersten Peripherieeinheit ausgetauschten alphanumerischen Nachrichten in dem zweiten Feld transportiert werden.
